# EUROPEAN PATENT APPLICATION

(11) **EP 4 807 045 A1**
(43) Date of publication of application: **16.09.2026**
(21) Application number: 26155606.2
(22) Date of filing: 01.02.2026
(51) Int. Cl.: C25B 1/04, C25B 3/26, C25B 15/02, C25B 15/029

(54) **METHOD FOR CONTROLLING ELECTROLYTIC DEVICE AND ELECTROLYTIC DEVICE**

(30) Priority: 14.03.2025 JP 2025041293
(71) Applicant: KABUSHIKI KAISHA TOSHIBA, Kawasaki-shi, Kanagawa (JP)
(72) Inventor: ONO, Akihiko, Kawasaki-shi (JP); KUDO, Yuki, Kawasaki-shi (JP); MIKOSHIBA, Satoshi, Kawasaki-shi (JP); KIYOTA, Yasuhiro, Kawasaki-shi (JP); YONETSU, Maki, Kawasaki-shi (JP); KOFUJI, Yusuke, Kawasaki-shi (JP); YAMAGIWA, Masakazu, Kawasaki-shi (JP); FUJIWARA, Naoya, Kawasaki-shi (JP); INOUE, Yusuke, Kawasaki-shi (JP); KITAGAWA, Ryota, Kawasaki-shi (JP)
(74) Representative: Henkel & Partner mbB

(57) **Abstract**

According to one embodiment, there is provided a method for controlling an electrolytic device (800) including a cathode electrode (2) that contains metal ions and reduces carbon dioxide, and an anode electrode (1) that oxidizes water to generate oxygen, the method including an acquisition step of acquiring information on a potential of the cathode electrode (2) and a potential of the anode electrode (1), and a control step of controlling the potential of the cathode electrode (2) or / and the potential of the anode electrode (1) such that the potential of the cathode electrode (2) is less than the potential of the anode electrode (1) when the potential of the anode electrode (1) is equal to or less than the potential of the cathode electrode (2).

## Description

### FIELD

Embodiments of the present invention relate to a method for controlling an electrolytic device and an electrolytic device.

### BACKGROUND

In an electrolytic device using a proton exchange membrane or a porous membrane between a cathode and an anode, when metal ions are contained in the cathode, the metal ions move to a solution on the anode side due to diffusion of the metal ions or a potential. This may cause a decrease in the performance of the electrolytic device.

### BRIEF DESCRIPTION OF THE DRAWINGS

FIG. 1 is a schematic diagram of a part of an electrolytic device according to an embodiment.
FIG. 2 is a schematic diagram showing an example of an electrolytic device according to the embodiment.
FIG. 3 is a flowchart showing an example of a method of controlling the electrolytic device according to the embodiment.
FIG. 4 is a schematic diagram showing a modification of the electrolytic device according to the embodiment.
FIG. 5 is a flowchart showing a modification of the method of controlling the electrolytic device according to the embodiment.
FIG. 6 is a schematic diagram of a part of the electrolytic device according to the embodiment.

### DETAILED DESCRIPTION

In general, according to one embodiment, there is provided a method for controlling an electrolytic device including a cathode electrode that contains metal ions and reduces carbon dioxide, and an anode electrode that oxidizes water to generate oxygen, the method including an acquisition step of acquiring information on a potential of the cathode electrode and a potential of the anode electrode, and a control step of controlling the potential of the cathode electrode or / and the potential of the anode electrode such that the potential of the cathode electrode is less than the potential of the anode electrode when the potential of the anode electrode is equal to or less than the potential of the cathode electrode.

Hereinafter, embodiments will be described with reference to the drawings. In the following description, the same reference numerals are given to constituent elements having the same or similar functions throughout the drawings, and redundant description will be omitted. The drawings are schematic diagrams for explaining the embodiments and facilitating the understanding thereof, and the shapes, dimensions, ratios, and the like thereof may be different from those of actual devices, but these can be appropriately changed in design in consideration of the following explanation and known techniques.

The physical property values in the specification are values at a temperature of 25°C and a pressure of 1atom. The thickness of each member is an average value of the distance in the stacking direction.

During operation of the electrolysis device, the potential of the cathode is negative relative to the potential of the anode. However, the operation of the electrolytic device may be stopped in order to perform maintenance such as refreshing of the electrolytic device. When the operation of the electrolytic device is repeatedly stopped and started, the potential of the cathode may become positive with respect to the potential of the anode, and for example, metal ions contained in the cathode may move to the anode, contaminate the anode solution, and deteriorate the performance of the electrolytic device. In order to solve this problem, the inventors have found that it is necessary to always control the potential to be negative regardless of the operation state of the electrolytic device, particularly, even from the time of stopping the operation to the time of restarting the operation. In this embodiment, the potential of the cathode is always controlled to be negative with respect to the potential of the anode. In particular, during the period from the time of stopping the operation to the time of restarting the operation, the potential of the cathode is controlled to be negative with respect to the potential of the anode, and thus, it is possible to operate the electrolytic device capable of continuously operating for a long time even when the start and stop of the electrolytic device are repeated while suppressing the deterioration of the performance.

In the description of the embodiment, when simply referred to as a cathode, the cathode electrode and the cathode electrode chamber are collectively referred to. The same applies to the anode. The anode electrode and the cathode electrode may be collectively referred to as electrodes.

### (First Embodiment)

The method for controlling an electrolytic device according to the embodiment is, for example, a method for controlling a carbon dioxide (CO₂) electrolytic device. Here, a method for controlling the carbon dioxide electrolytic device will be described.

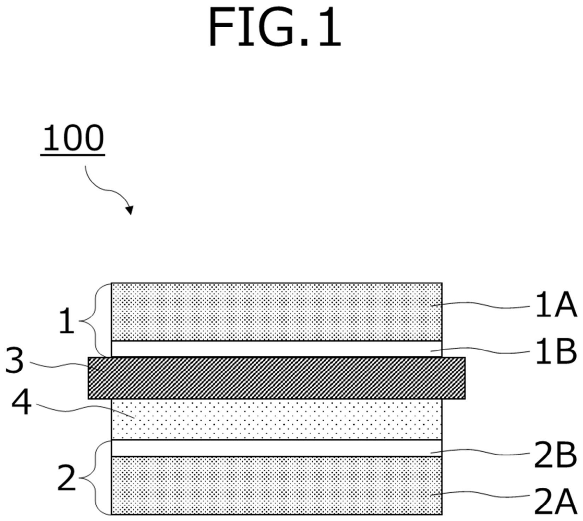

FIG. 1 is a schematic diagram of a membrane electrode assembly that is a part of an electrolytic device according to an embodiment. The membrane electrode assembly 100 includes an anode electrode 1, a cathode electrode 2, a membrane 3, and an intermediate layer 4. The membrane electrode assembly 100 is included in the electrolytic device according to the embodiment.

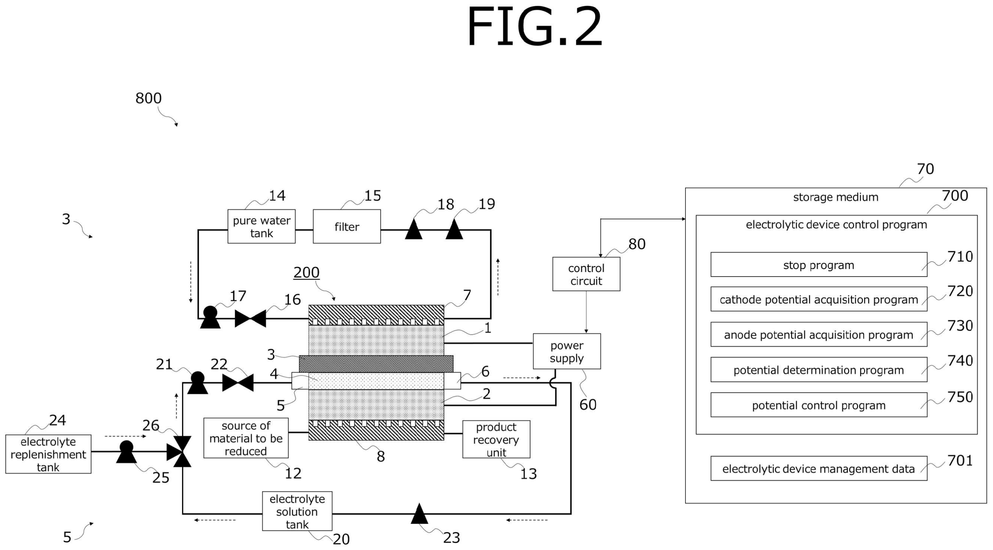

FIG. 2 is a schematic diagram illustrating an example of the electrolytic device according to the embodiment. The electrolytic device 800 includes an electrochemical cell 200, a source of material to be reduced 12, a product recovery unit 13, a pure water tank 14, a filter 15, a first valve 16, a first pump 17, a conductivity meter 18, a first ion concentration meter 19, an electrolyte solution tank 20, a second pump 21, a second valve 22, a second ion concentration meter 23, an electrolyte replenishment tank 24, a third pump 25, a third valve 26, a power supply 60, a storage medium 70, and a control circuit 80. The storage medium 70 includes an electrolytic device control program 700 for controlling the electrolytic device, and electrolytic device management data 701 for storing the measurement result of the electrolytic device. The electrolytic device control program 700 includes a stop program 710 for stopping the operation of the electrolytic device, a cathode potential acquisition program 720 for acquiring information on the potential of the cathode electrode 2, an anode potential acquisition program 730 for acquiring information on the potential of the anode electrode 1, a potential determination program 740 for determining whether the potential of the anode is equal to or lower than the potential of the cathode, and a potential control program 750 for controlling the potential of the cathode to be lower than the anode potential. The dashed arrows in the figure indicate the direction of fluid flow. The fluid flow may be in the opposite direction to that shown.

The electrochemical cell 200 includes a membrane electrode assembly 100, an electrolyte supply path 5, an electrolyte discharge path 6, a first separator 7, and a second separator 8.

A state in which the operation of the electrolytic device 800 is started will be described. The state in which the operation of the electrolytic device 800 is started is a state in which a voltage is applied between the anode electrode 1 and the cathode electrode 2 using the power supply 60. The temperature in the electrolytic device at this time is preferably between room temperature and 100°C. When the temperature becomes higher than 50°C, for example, a device for cooling the electrolytic device 800 can be further provided.

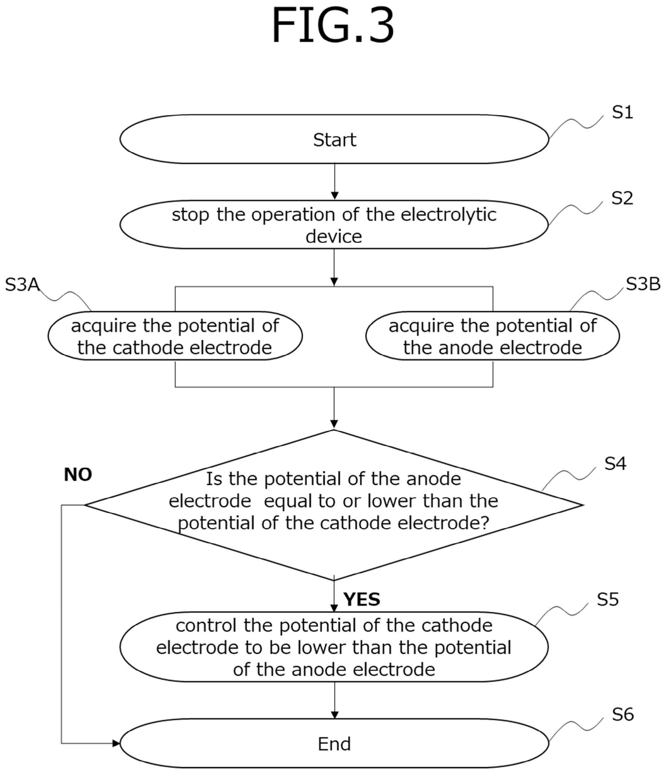

A method for controlling the electrolytic device according to the embodiment will be described with reference to FIG. 3. FIG. 3 is a flowchart illustrating an example of a flow of a control method of the electrolytic device according to the embodiment. Note that this flowchart is an example, and the order of the processes and the like are not limited as long as a necessary processing result can be obtained. The same applies to the following flowcharts. A method for controlling an electrolytic device according to the embodiment includes an acquisition step of acquiring information on a potential of a cathode electrode and a potential of an anode electrode of an operating device, and a control step of controlling the potential of the cathode electrode and / or the potential of the anode electrode so that the potential of the cathode electrode is less than the potential of the anode electrode when the potential of the anode electrode is equal to or less than the potential of the cathode electrode. The method for controlling the electrolytic device according to the embodiment can be divided into, for example, a stopping step (S2) of stopping the electrolytic device, a step (S3A) of acquiring information on the potential of the cathode electrode 2, a step (S3B) of acquiring information on the potential of the anode electrode 1, a step (S4) of determining whether or not the potential of the anode electrode 1 is equal to or lower than the potential of the cathode electrode 2, and a step (S5) of controlling the potential of the cathode electrode 2 to be lower than the potential of the anode electrode 1. Here, S1 and subsequent steps will be described in a state where the operation of the electrolytic device 800 is started.

In S2, the control circuit 80 reads and executes the stop program 710 to stop the operation of the electrolytic device 800. The stop of the operation of the electrolytic device 800 means a state in which the power supply 60 does not apply a voltage between the cathode electrode 2 and the anode electrode 1. In the stopping step, the operation of the electrolytic device 800 can be stopped based on the capacity of the product recovery unit 13. The determination of the stop of the operation is made, for example, when the capacity of the product recovery unit 13 becomes, for example, 80% or more.

In S3A, the control circuit 80 reads and executes the cathode potential acquisition program 720 to acquire information on the potential of the cathode electrode 2 by using a cathode voltage measuring circuit (not shown). The cathode voltage measuring circuit can always measure the voltage of the cathode electrode 2.

In S3B, the control circuit 80 reads and executes the anode potential acquisition program 730 to acquire information on the potential of the anode electrode 1 using an anode voltage measuring circuit (not shown). The anode voltage measuring circuit can always measure the voltage of the anode electrode 1.

In S4, the control circuit 80 reads and executes the potential determination program 740 to determine whether the potential of the anode electrode 1 is equal to or lower than the potential of the cathode electrode 2, using the potentials of the cathode electrode 2 and the anode electrode 1 acquired in S2A and S2B. When the potential of the anode electrode 1 is equal to or lower than the potential of the cathode electrode 2, the process proceeds to S5 (YES). If the potential of the anode electrode 1 is not equal to or lower than the potential of the cathode electrode 2, the process proceeds to S6 (NO).

In S5, the control circuit 80 reads and executes the potential control program 750 to control the potential of the cathode electrode 2 and / or the potential of the anode electrode 1 so that the potential of the cathode electrode 2 is lower than the potential of the anode electrode 1. As long as the potential of the cathode electrode 2 is lower than the potential of the anode electrode 1, only the cathode electrode 2 or only the anode electrode 1 may be controlled, or the potentials of both the cathode electrode 2 and the anode electrode 1 may be controlled. It is desirable to control the potential of the anode electrode 1 to be higher than the 0V and equal to or lower than 1.23 V with respect to the potential of the cathode electrode 2. When the temperature is equal to or lower than the 0 V, the electrolytic device 800 is in a polarity inversion state as an electrolysis reaction. The surface of the cathode electrode 2 formed for reduction is weak to oxidation reaction, and therefore oxidation reaction proceeds. On the other hand, the reduction reaction proceeds at the anode of the oxidation reaction electrode. Specifically, the metal oxide has activity of oxidation reaction. However, when the reduction reaction proceeds to form a metal, the catalytic activity of the oxidation reaction may decrease. When the voltage is higher than the 1.23 V, the electrolysis reaction of water proceeds due to the theoretical electrolysis voltage of water. Then, since hydrogen is generated as the current flows and the power is lost, it is not preferable as a protection reaction in a stop state of the cell.

When the potential of the anode electrode 1 is within this range, the potential of the cathode electrode 2 can be kept negative with respect to the potential of the anode electrode 1.

A current of 0.001% or more and 0.1% or less of the current flowing in the state where the operation of the electrolytic device 800 is started is caused to flow between the cathode electrode 2 and the anode electrode 1 by using the power supply 60 controlled by the control circuit 80. This prevents the voltage of the cathode electrode 2 from becoming equal to or lower than the 0 V.

In addition to the above-described method, a method of providing a diode between the anode electrode 1 and the power supply 60 is also possible. This prevents a current from flowing from the anode electrode 1 to the power supply 60.

Hereinafter, members included in the membrane electrode assembly 100 will be described.

The anode electrode 1 includes a first substrate 1A and a first catalytic layer 1B provided on the first substrate 1A. The anode electrode 1 is provided adjacent to the membrane 3. The first catalytic layer 1B of the anode electrode 1 is provided on the side of the membrane 3. The anode electrode 1 is preferably in direct contact with the membrane 3.

At the anode electrode 1, for example, an oxidation reaction of water (H₂O) in the liquid occurs, and O₂ and hydrogen ions (H⁺) are generated.

The first substrate 1A is a support of the first catalytic layer 1B. The first substrate 1A is preferably a conductive member that allows solutions and ions flowing through the anode electrode 1 to pass therethrough. The first substrate 1A is, for example, a mesh material, a punching material, a porous body of sintered metal fibers, a porous body of sintered metal particles, or the like. The first substrate 1A includes a metallic or carbon material. Examples of metals used for the first substrate 1A include titanium, aluminum, iron, nickel, tantalum, niobium, hafnium, zirconium, zinc, tungsten, bismuth, and antimony. The first substrate 1A may contain the metallic element contained in the first catalytic layer 1B. The carbon material is, for example, carbon paper or carbon cloth.

The first catalytic layer 1B is provided between the first substrate 1A and the membrane 3. The first catalytic layer 1B is preferably in direct contact with the first substrate 1A. The first catalytic layer 1B is preferably in direct contact with the membrane 3. The first catalytic layer 1B is preferably a porous body.

Examples of the first catalytic layer 1B include metals such as platinum (Pt), palladium (Pd), and nickel (Ni), alloys containing these metals, intermetallic compounds containing these metals, binary metallic oxides such as manganese oxides (Mn-O), iridium oxides (Ir-O), nickel oxides (Ni-O), cobalt oxides (Co-O), iron oxides (Fe-O), tin oxides (Sn-O), indium oxides (In-O), ruthenium oxides (Ru-O), lithium oxides (Li-O), and lanthanum oxides (La-O), ternary metallic oxides such as Ni-Co-O, Ni-Fe-O, La-Co-O, Ni-La-O, and Sr-Fe-O, quaternary metallic oxides such as Pb-Ru-Ir-O and La-Sr-Co-O, and metallic complexes such as Ru complexes and Fe complexes. The first catalytic layer 1B may contain two or more types of materials.

For example, water is supplied to the anode electrode 1 as an anode solution. The electrical resistivity of the anode solution supplied to the anode electrode 1 is preferably 0.1 MΩ·cm or more and 18.24 MΩ·cm or less, and the pH of the anode solution in the anode electrode 1 is preferably 1 or more and 7 or less, more preferably 3 or more and 7 or less. The pH of the anode solution in the anode electrode 1 is preferably measured at the outlet of the flow path of the anode solution.

The metal ion concentration (total concentration of metal ions) in the anode solution contained in the anode electrode 1 is preferably 0% or more and 10% or less, more preferably 0% or more and 7% or less, and still more preferably 1% or more and 5% or less of the metal ion concentration (total concentration of metal ions) in the electrolyte solution of the intermediate layer 4.

The carbonate ion concentration (total concentration of HCO₃⁻ and CO₃²⁻) in the anode solution contained in the anode electrode 1 is preferably 0% or more and 30% or less, more preferably 1% or more and 20% or less, and still more preferably 3% or more and 10% or less of the carbonate ion concentration (total concentration of HCO₃⁻ and CO₃²⁻) in the electrolyte solution of the intermediate layer 4.

The cathode electrode 2 includes a second substrate 2A and a second catalytic layer 2B provided on the second substrate 2A. The cathode electrode 2 is provided adjacent to the intermediate layer 4. The second catalytic layer 2B of the cathode electrode 2 is provided on the intermediate layer 4 side. The cathode electrode 2 is preferably in direct contact with the intermediate layer 4.

At the cathode electrode 2, for example, CO₂ (carbon dioxide) is reduced to produce a carbonaceous compound. The carbonaceous compound is, for example, CO (carbon monoxide), formic acid (HCOOH), CH₄ (methane), C₂H₆ (ethane), C₂H₄ (ethylene), CH₃OH (methanol), C₂H₅OH (ethanol), C₂H₆O₂ (ethylene glycol), or the like.

A gas containing CO₂ is supplied to the cathode electrode 2. It is preferable that 30 vol% or more and 100 vol% or less of the gas supplied to the cathode electrode 2 is the CO₂. A liquid is supplied to the anode electrode 1 and the intermediate layer 4, and a gas is supplied to the cathode electrode 2.

The second substrate 2A is a support of the second catalytic layer 2B. The second substrate 2A is a so-called gas diffusion layer. The second substrate 2A is preferably a conductive member that allows gases, solutions, and ions flowing through the cathode electrode 2 to pass therethrough. The second substrate 2A is, for example, carbon paper or carbon cloth.

The second substrate 2A is preferably subjected to a treatment for imparting an appropriate hydrophobic property. Hydrophobicity is a property of low affinity for water. Examples of the material exhibiting hydrophobicity include fluoropolymer such as polytetrafluoroethylene (PTFE), polychlorotrifluoroethylene, polyvinylidene fluoride, polyvinyl fluoride, and perfluoroalkoxy fluororesin. By incorporating such a fluoropolymer into carbon paper, carbon cloth, or the like, it is possible to acquire the second substrate 2A to which appropriate hydrophobic properties are imparted while maintaining conductivity. The second substrate 2A may include a porous layer of aggregated carbon particles such as carbon black between the carbon paper or cloth and the second catalytic layer 2B. The average primary particle diameter of the carbon particles is, for example, 10 nm or more and 300 nm or less. The carbon particles may also be provided with the above-described fluoropolymer. The carbon particles are provided between the carbon paper or cloth and the second catalytic layer 2B.

The second substrate 2A is preferably more hydrophobic than the anode electrode 1 and more hydrophobic than the intermediate layer 4. The aqueous solution contained in the intermediate layer 4 is less likely to permeate the second substrate 2A side due to the high hydrophobic property of the second substrate 2A.

The second catalytic layer 2B is provided between the second substrate 2A and the intermediate layer 4. The second catalytic layer 2B is preferably in direct contact with the second substrate 2A. The second catalytic layer 2B is preferably in direct contact with the intermediate layer 4. The second catalytic layer 2B is preferably a porous body.

Examples of the second catalytic layer 2B include metals such as gold (Au), silver (Ag), copper (Cu), platinum (Pt), palladium (Pd), nickel (Ni), cobalt (Co), iron (Fe), manganese (Mn), titanium (Ti), cadmium (Cd), zinc (Zn), indium (In), gallium (Ga), lead (Pb), and tin (Sn), metallic materials such as alloys and intermetallic compounds containing at least one of these metals, carbonaceous materials such as carbons (C), graphene, CNTs (carbon nanotubes), fullerenes, and Ketjen black, and metallic complexes such as Ru complexes and Re complexes. The catalytic material is provided on the intermediate layer 4 side on the second substrate 2A.

The second catalytic layer 2B may contain an ionomer.

The membrane 3 is preferably provided between the anode electrode 1 and the intermediate layer 4. When the membrane 3 is provided between the anode electrode 1 and the intermediate layer 4, the membrane 3 is preferably in direct contact with the intermediate layer 4. The membrane 3 is preferably in direct contact with the surface of the intermediate layer 4 facing the anode electrode 1.

The membrane 3 is, for example, a cation exchange (proton conductive) membrane. Examples of the membrane 3 include a fluorine-based polymer or an aromatic hydrocarbon-based polymer having one or more selected from the group consisting of a sulfonic acid group, a sulfonimide group, and a sulfuric acid group. As the membrane 3, a fluorine-based polymer having a sulfonic acid group can also be used. Examples of the fluorine-based polymer having a sulfonic acid group include Nafion (trademark, manufactured by DuPont), Flemion (trademark, manufactured by Asahi Kasei Corporation), Selemion (trademark, manufactured by Asahi Kasei Corporation), Aquivion (trademark; Solvay Specialty Polymers), and Aciplex (trademark, manufactured by AGC Inc.). As the membrane 3, an anion exchange membrane, a porous membrane, or the like can be used. The use of an anion exchange membrane or a microporous membrane facilitates the passage of CO₃²⁻ (carbonate ion) or HCO₃⁻ (bicarbonate ion) produced on the cathode side through the membrane 3, and therefore the membrane 3 is preferably a cation exchange membrane. In addition, when the membrane 3 is a cation exchange membrane, carbon dioxide is less likely to pass through the membrane 3 even when ionized. Therefore, the carbon dioxide supplied to the cathode electrode 2 is less likely to move to the anode electrode 1 side, and the loss of the carbon dioxide supplied to the cathode electrode 2 can be reduced.

When the membrane electrode assembly 100 includes the membrane 3 and the intermediate layer 4 and the membrane 3 and the intermediate layer 4 are adjacent to each other, the membrane 3 is preferably a cation exchange membrane.

The thickness of the membrane 3 can be appropriately determined in consideration of the properties of the membrane such as permeation properties and durability. From the viewpoint of strength, dissolution resistance, and output characteristics of a membrane electrode assembly (MEA), the thickness of the membrane 3 is preferably 20 µm or more and 500 µm or less, more preferably 30 µm or more and 300 µm or less, and still more preferably 50 µm or more and 200 µm or less.

The intermediate layer 4 is provided between the membrane 3 and the cathode electrode 2. The surface of the intermediate layer 4 on the cathode electrode 2 side is preferably in direct contact with the second catalytic layer 2B of the cathode electrode 2. The surface of the intermediate layer 4 opposite to the cathode electrode 2 is preferably in direct contact with the membrane 3.

The intermediate layer 4 is preferably a porous body. The intermediate layer 4 is preferably a porous body with electrical conductivity. The intermediate layer 4 is preferably hydrophilic. The intermediate layer 4 is a conductive porous body, and the porous body is preferably hydrophilic.

The intermediate layer 4 preferably has cation permeability.

The intermediate layer 4 preferably contains a carbon material and / or a metal material. The intermediate layer 4 preferably contains one or more selected from the group consisting of carbon particles, carbon fibers, metal fibers, and metal particles. The intermediate layer 4 is preferably composed of one or more selected from the group consisting of carbon particles, carbon fibers, metal fibers, and metal particles.

The porosity of the intermediate layer 4 is preferably 30% or more and 80% or less, more preferably 40% or more and 75% or less, and still more preferably 50% or more and 70% or less.

The intermediate layer 4 contains an electrolyte solution containing metal ions. The electrolyte solution containing metal ions is preferably an aqueous solution. The metal ion contained in the electrolyte solution contained in the intermediate layer 4 is preferably a monovalent metal ion. The metal ion contained in the electrolyte solution contained in the intermediate layer 4 is preferably a monovalent alkali metal ion. The metal ions contained in the electrolyte solution contained in the intermediate layer 4 preferably include one or more selected from the group consisting of potassium ions, sodium ions, lithium ions, platinum ions, manganese ions, and cerium ions, and more preferably include one or more selected from the group consisting of potassium ions, sodium ions, and lithium ions.

The anion (counter ion of the metal ion) contained in the electrolyte solution of the intermediate layer 4 is preferably one or more selected from the group consisting of HCO₃⁻ (bicarbonate ion) and CO₃²⁻ (carbonate ion), and is preferably HCO₃⁻ (bicarbonate ion) and / or CO₃²⁻ (carbonate ion). In addition, phosphate ions, phosphite ions, borate ions, and the like may be contained from the viewpoint of improving the conductivity of the electrolyte solution, improving the ion migration performance, adjusting the pH, improving the catalyst performance, and the like.

The concentration of the metal ion contained in the electrolyte solution is preferably 0.01 mol/L or more and 1 mol/L or less, more preferably 0.03 mol/L or more and 0.7 mol/L or less, and still more preferably 0.05 mol/L or more and 0.5 mol/L or less.

The concentration of the anion contained in the electrolyte solution is preferably 0.1 mol/L or more and 1 mol/L or less, more preferably 0.2 mol/L or more and 1 mol/L or less, and still more preferably 0.3 mol/L or more and 0.7 mol/L or less.

The electrolyte solution of the intermediate layer 4 is, for example, preferably an aqueous solution containing one or more selected from the group consisting of KHCO₃, NaHCO₃, LiHCO₃, RbCO₃, and CsCO₃, preferably an aqueous solution containing one or more selected from the group consisting of KHCO₃, NaHCO₃, and LiHCO₃, preferably an aqueous solution containing one selected from the group consisting of KHCO₃, NaHCO₃, and LiHCO₃, and more preferably an aqueous solution containing KHCO₃.

The pH of the electrolyte solution contained in the intermediate layer 4 is preferably 3 or more and 9 or less, more preferably 4 or more and 8.5 or less, and still more preferably 5 or more and 8 or less.

The difference in pH between the electrolyte solution contained in the intermediate layer 4 and the water contained in the anode electrode 1 is preferably 0.1 or more and 7 or less, more preferably 1 or more and 6 or less, and still more preferably 1 or more and 4 or less.

Although the electrolyte solution is supplied to the intermediate layer 4, the cation exchange membrane is used as the membrane 3, and thus the anion contained in the electrolyte solution is less likely to move to the anode electrode 1 through the cation exchange membrane.

The thickness of the intermediate layer 4 is preferably 10 µm or more and 500 µm or less, more preferably 20 µm or more and 400 µm or less, and further preferably 30 µm or more and 300 µm or less.

The thickness of the intermediate layer 4 is preferably 1 time or more and 3 times or less, more preferably 1 time or more and 2.5 times or less, and still more preferably 1 time or more and 2 times or less the thickness of the membrane 3.

When the CO₂ supplied to the cathode electrode 2 and the metal ion contained in the electrolyte solution supplied to the membrane electrode assembly 100 reach the cathode electrode 2 through the membrane 3, the metal ion and the CO₂ (ion) react with each other, and carbonate is easily formed. In the membrane electrode assembly 100 of the embodiment, the metal ions are prevented from moving to the cathode electrode 2, and thus the formation of the carbonate is effectively suppressed.

In addition, by using a cation exchange membrane as the membrane 3, the CO₂ supplied to the cathode electrode

2 is less likely to pass through the membrane 3 even when the CO₂ is ionized, and thus the membrane electrode assembly 100 has an advantage that the loss of the CO₂ supplied as a raw material is small.

The electrolyte supply path 5 is provided on one surface of the intermediate layer 4 on which neither the cathode electrode 2 nor the membrane 3 is provided. The electrolyte supply path 5 is, for example, a pipe for supplying the electrolyte solution to the intermediate layer 4. The electrolyte solution contained in the intermediate layer 4 is supplied from the electrolyte supply path 5 to the intermediate layer 4. The electrolyte solution is fed by the second pump 21 and the third pump 25 and supplied to the intermediate layer 4 through the electrolyte supply path 5.

When the electrolyte supply path 5 is in contact with the membrane 3, the electrolyte supply path 5 is preferably made of a carbon material and / or a metal material. The electrolyte supply path 5 is preferably formed of a solid material, not a porous material.

The electrolyte discharge path 6 is provided on a surface of the intermediate layer 4 on which the cathode electrode 2, the membrane 3, and the electrolyte supply path 5 are not provided. The electrolyte solution contained in the intermediate layer 4 is discharged from the electrolyte discharge path 6. The electrolyte discharge path 6 is, for example, a pipe for discharging the electrolyte solution from the intermediate layer 4.

The first separator 7 is provided on the first substrate 1A side of the anode electrode 1. The first separator 7 is provided with a flow path for supplying liquid water as an anode solution to the anode electrode 1.

The second separators 8 are provided on the second substrate 2A side of the cathode electrodes 2. The second separators 8 are provided with flow paths for supplying a gas containing a material to be reduced, for example, CO₂, to the cathode electrodes 2.

The source of the material to be reduced 12 supplies the material to be reduced to the second separator 8 of the cathode electrode 2. The material to be reduced is, for example, CO₂ gas. The material to be reduced is used for the reaction of the cathode electrode 2.

The product recovery unit 13 recovers, for example, a carbon compound generated at the cathode electrode 2. The product recovery unit 13 may contain an unreacted material to be reduced, but it is preferable that the product and the material to be reduced are separated. The product recovery unit 13 is also referred to as a buffer tank. When the capacity of the product recovery unit 13 becomes, for example, 80% or more, the operation of the electrolytic device 800 can be stopped.

The pure water tank 14 stores pure water as an anode solution to be supplied to the first separator 7 of the anode electrode 1. By using pure water as the anode solution, it is not necessary to adjust the ion concentration of the anode solution, and the electrolytic device 800 can be stably operated for a long period of time. The pure water used here is preferably water having an electric conductivity of 1 mS/m or less, more preferably water having an electric conductivity of 0.1 mS/m. The pure water tank 14 can also store, for example, pure water discharged from the first separator 7.

The filter 15 is located between the first separator 7 and the pure water tank 14, and filters the water discharged from the first separator 7.

The first valve 16 is located between the first pump 17 and the first separator 7. The first valve 16 is controllable by the control circuit 80, and adjusts the amount of pure water flowing into the first separator 7.

The first pump 17 is located between the pure water tank 14 and the first valve 16. The first pump 17 is controllable by the control circuit 80, and transports pure water from the pure water tank 14 to the first separator 7.

The conductivity meter 18 and the first ion concentration meter 19 are located between the first separator 7 and the filter 15. The conductivity meter 18 and the first ion concentration meter 19 can acquire information by the control circuit, and measure the conductivity and the ion concentration of the water discharged from the first separator 7. The order of arrangement of the conductivity meter 18 and the first ion concentration meter 19 is not limited. The conductivity meter 18 and the first ion concentration meter 19 may be located between the pure water tank 14 and the filter 15.

The electrolyte solution tank 20 stores, for example, the electrolyte solution discharged from the intermediate layer 4. The metal ions contained in the electrolyte solution are supplied to the cathode electrode 2 to be used for the reduction reaction.

The second pump 21 is located between the third valve 26 and the second valve 22. The second pump 21 transports the electrolyte solution from the electrolyte solution tank 20 and / or the electrolyte replenishment tank 24 to the electrolyte supply path 5.

The second valve 22 is located between the second pump 21 and the electrolyte supply path 5. The second valve 22 can be controlled by the control circuit 80, and adjusts the amount of the electrolyte solution flowing into the intermediate layer 4 connected to the electrolyte supply path 5.

The second ion concentration meter 23 is located between the electrolyte discharge path 6 and the electrolyte solution tank 20. The second ion concentration meter 23 can acquire information by the control circuit, and measures the ion concentration of the electrolyte solution discharged from the electrolyte discharge path 6.

The electrolyte replenishment tank 24 stores an electrolyte solution to be additionally supplied to the electrolyte supply path 5 separately from the electrolyte solution tank 20.

The third pump 25 is located between the electrolyte replenishment tank 24 and the third valve 26. The third pump 25 is controllable by the control circuit 80, and transports the electrolyte solution from the electrolyte replenishment tank 24 to the electrolyte supply path 5.

The third valve 26 is located at the position between each of the third pump 25, the electrolyte solution tank 20, and the second pump 21. The third valve 26 can be controlled by the control circuit 80, and adjusts the amount of the electrolyte solution additionally supplied to flow into the intermediate layer 4.

The power supply 60 is attached to the electrochemical cell 200, and a voltage is applied between the anode electrode 1 and the cathode electrode 2. The power supply 60 is controllable by a control circuit 80. This allows the electrolytic reaction of carbon dioxide to proceed. The power supply 60 may include, for example, a potentiostat. The power supply 60 is not limited to a conventional power supply and a battery, and may include a power source that supplies power generated by renewable energy such as a solar cell and wind power generation. The power supply 60 may further include a power controller that adjusts the output of the power supply to control the voltage between the cathode electrode 2 and the anode electrode 1. The power supply 60 may be provided outside the electrolytic device 800.

The storage medium 70 is a storage device referred to as a main storage device or an auxiliary storage device. The storage medium 70 is a magnetic disk, an optical disk (CD-ROM, CD-R, DVD, or the like), a magneto-optical disk (MO or the like), a semiconductor memory, or the like. The electrolytic device 800 may be provided with only one memory or the like serving as the storage medium 70, or may be provided with a plurality of memories or the like. The storage medium 70 stores a program executed by the control circuit 80, data of a result of execution of the program, and the like.

The programs included in the electrolytic device control program 700 do not need to be stored in the storage medium 70. For example, a plurality of programs stored in the storage medium 70 may be stored in different storage media, or may be operated in a cloud. The plurality of programs stored in the storage medium 70 may be executed by a device including a plurality of control circuits 80 or an external control circuit.

The control circuit 80 controls the second pump 21, the second valve 22, the second ion concentration meter 23, the third pump 25, the third valve 26, the first pump 17, the first valve 16, the conductivity meter 18, the first ion concentration meter 19, and the power supply 60 to perform flow control of the electrolyte solution and the pure water. The control circuit 80 reads and executes a program stored in the storage medium 70 to control the potential of the electrode. The control circuit 80 is configured by a processor, an integrated circuit, or the like, and the processor or the like constituting the control circuit 80 includes any one of a central processing unit (CPU), an application specific integrated circuit (ASIC), a microcontroller unit (MCU), a field programmable gate array (FPGA), a digital signal processor (DSP), and the like. The control circuit 80 may be constituted by one processor or the like, or may be constituted by a plurality of processors or the like.

### (Second Embodiment)

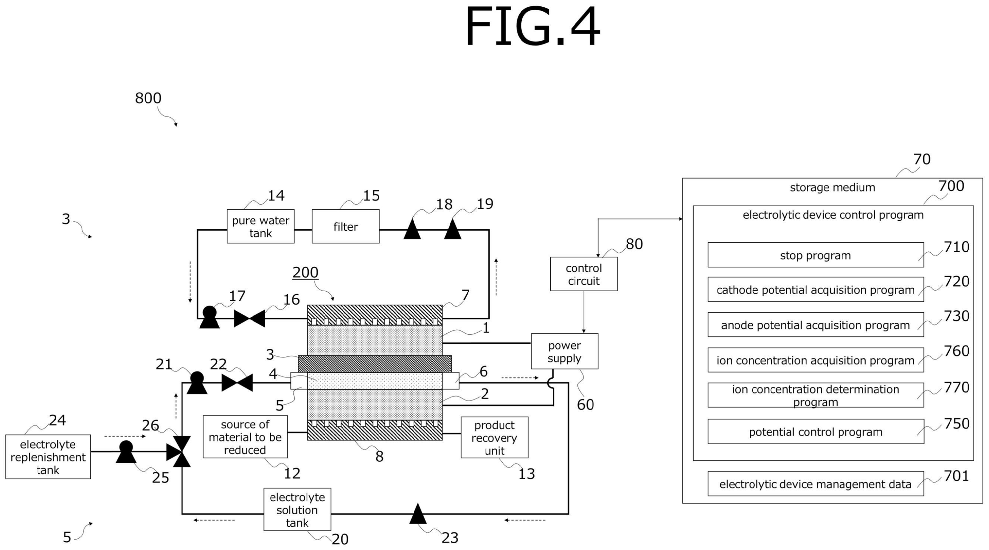

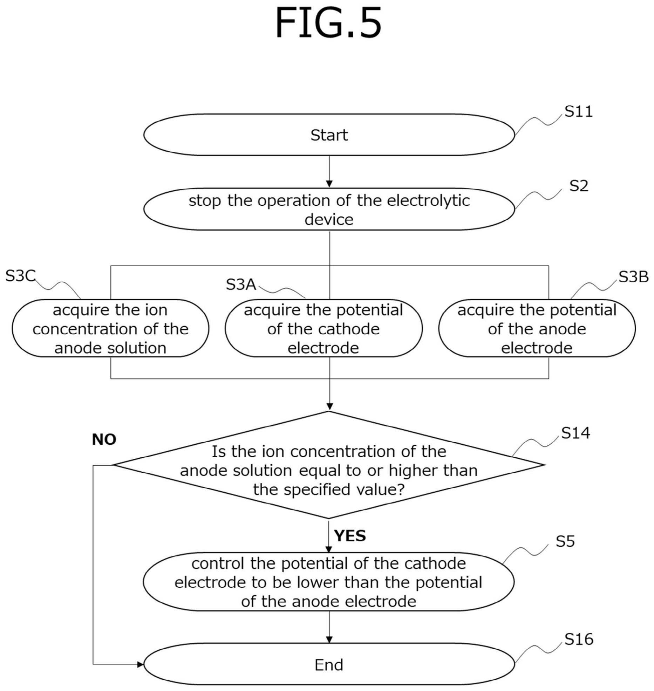

In a second embodiment, an example in which whether or not the potential control is possible is determined using the ion concentration of the anode solution will be described with reference to FIGS. 4 and 5. FIG. 4 is a schematic diagram illustrating a modification example of the electrolytic device according to the embodiment. The electrolytic device according to the second embodiment is the same as the electrolytic device according to the first embodiment except that the electrolytic device according to the second embodiment includes an ion concentration acquisition program 760 and an ion concentration determination program 770 instead of the potential determination program in the first embodiment.

A method for controlling the electrolytic device according to the embodiment will be described with reference to FIG. 5. FIG. 5 is a flowchart illustrating a modification example of the flow of the method for controlling the electrolytic device according to the embodiment. Since S3A, S3B, and S5 and subsequent steps are the same as those in the flowchart of FIG. 3, S3C and S14 will be described below.

In S3C, the control circuit 80 reads and executes the ion concentration acquisition program 760 to acquire information on the ion concentration of the anode solution using the first ion concentration meter 19.

In S14, the control circuit 80 reads and executes the ion concentration determination program 770 to determine whether the ion concentration of the anode solution is equal to or higher than the specified value by using the ion concentration of the anode solution acquired in S3C. If the ion concentration of the anode solution is equal to or higher than the specified value, the process proceeds to S5 (YES). If the ion concentration of the anode solution is not equal to or greater than the specified value, the process proceeds to S16 (NO). The specified value is preferably set in a range of 1 µmol/L to 0.1 mmol/L, and is, for example, 0.1 mmol/L. The specified value can be stored in advance in the electrolytic device control program 700. By measuring the ion concentration, the position and conditions of the potential in the electrode can be optimally controlled, and therefore, contamination of the anode electrode 1 due to the movement of metal ions can be more accurately suppressed.

By measuring the conductivity of the anode solution using the conductivity meter 18 instead of the second ion concentration meter, it is also possible to determine whether or not the potential control is possible based on the responsiveness to the current change. Since the conductivity can be measured easily, a method for controlling an electrolytic device with excellent cost efficiency and controllability can be provided. In the method for controlling the electrolytic device according to the embodiment, in consideration of the capacity of the filter 15 and the like, the conductivity of the anode solution is preferably controlled to be 0.05 µS/cm or more and 5 µS/cm or less, or 0.1 MΩ/cm or more and 15MΩ/cm or less. More preferably, the conductivity of the anode solution is controlled to be less than or equal to 1 µS/cm or greater than or equal to 1MΩ/cm.

The ion concentration and the conductivity described above can be measured by, for example, a conductivity meter, an ion concentration meter, ion chromatography, inductively coupled plasma (ICP), or the like.

### (Other Embodiments)

The method for controlling the electrolytic device according to the embodiment can further include a restarting step of restarting the operation of the electrolytic device 800. Here, the restart of the operation of the electrolytic device 800 is the same state as the state in which the operation of the electrolytic device 800 is started. In a state where the operation of the electrolytic device 800 is stopped, the potential of the cathode electrode 2 may become higher than the potential of the anode electrode 1, and thus, controlling the potential by the method as described above is effective for maintaining the performance of the electrolytic device.

In the present specification, an example of the method for controlling the electrolytic device in which the potential of the cathode electrode 2 is controlled to be lower than the potential of the anode electrode 1 has been described. In the method for controlling the electrolytic device according to the embodiment, the anode electrode 1 may be controlled such that the potential of the anode electrode 1 is higher than the potential of the cathode electrode 2.

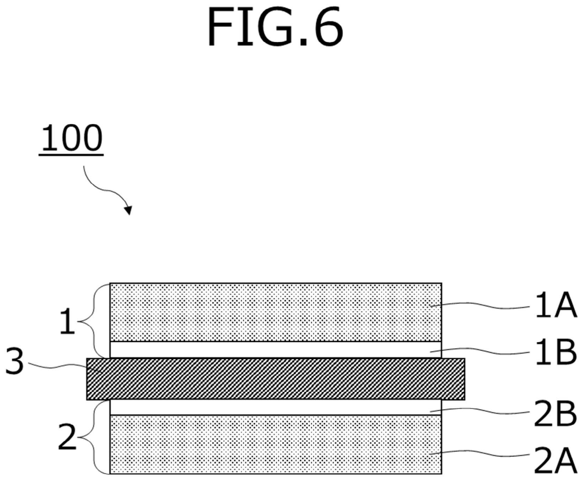

In the description of the present embodiment, the case where the membrane electrode assembly 100 includes the anode electrode 1, the cathode electrode 2, the membrane 3, and the intermediate layer 4 has been described. The membrane electrode assembly 100 included in the electrolytic device according to the embodiment may be a membrane electrode assembly including an anode electrode 1, a cathode electrode 2, and a membrane 3 as illustrated in FIG. 6. In this case, the cathode electrode 2 and the membrane 3 are adjacent to each other, and are preferably in direct contact with each other.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. These embodiments and modifications thereof are included in the scope and gist of the invention, and are included in the invention described in the claims and the equivalent scope thereof.

Hereinafter, the invention of the embodiment will be described below.
<1> A control method of an electrolytic device , in which the electrolytic device includes a cathode electrode that contains metal ions and reduces carbon dioxide and an anode electrode that oxidizes water to generate oxygen, the method comprising:
   an acquisition step of acquiring information regarding a potential of the cathode electrode and a potential of the anode electrode, and
   a control step of controlling the potential of the cathode electrode and / or the potential of the anode electrode so that the potential of the cathode electrode is less than the potential of the anode electrode when the potential of the anode electrode is equal to or less than the potential of the cathode electrode.
<2> The method for controlling the electrolytic device according to <1>, further comprising:
   a stopping step of stopping an operation of the electrolytic device.
<3> The method for controlling the electrolytic device according to <1> or <2>, wherein
   the electrolytic device further includes a membrane between the cathode electrode and the anode electrode.
<4> The method for controlling the electrolytic device according to any one of <1> to <3>, wherein
   at least one of the group consisting of carbon monoxide, formic acid, methane, ethane, ethylene, methanol, ethanol, and ethylene glycol is produced at the cathode electrode.
<5> The method for controlling the electrolytic device according to any one of <1> to <4>, wherein
   the control step controls the potential of the anode to be higher than the potential of the cathode by more than 0 V and equal to or lower than 1.23 V.
<6> The method for controlling the electrolytic device according to any one of <1> to <5>, wherein
   in the control step, a current of 0.001% or more and 0.1% or less of a current during operation of the electrolytic device is caused to flow between the cathode electrode and the anode electrode.
<7> The method for controlling the electrolytic device according to any one of <1> to <6>, wherein
   the electrolytic device further includes
   a power supply, and
   a diode between the anode electrode and the power supply.
<8> The method for controlling an electrolytic device according to any one of <1> to <7>, wherein
   the control step controls the potential of the cathode electrode based on the conductivity of the anode solution.
<9> The method for controlling the electrolytic device according to any one of <1> to <8>, wherein
   the control step includes controlling the potential of the cathode electrode based on ion concentration of the anode solution.
<10> An electrolytic device comprising:
   a cathode electrode containing metal ions and configured to reduce carbon dioxide, an anode electrode configured to oxidize water to generate oxygen, and
   a control circuit configured to
      acquire information regarding a potential of the cathode electrode and a potential of the anode electrode, and
      control the potential of the cathode electrode and / or the potential of the anode electrode so that the potential of the cathode electrode is less than the potential of the anode electrode when the potential of the anode electrode is equal to or less than the potential of the cathode electrode.

## Claims

1. A control method of an electrolytic device (800) , in which the electrolytic device (800) includes a cathode electrode (2) that contains metal ions and reduces carbon dioxide and an anode electrode (1) that oxidizes water to generate oxygen, the method comprising:
an acquisition step of acquiring information regarding a potential of the cathode electrode (2) and a potential of the anode electrode (1), and
a control step of controlling the potential of the cathode electrode (2) and / or the potential of the anode electrode (1) so that the potential of the cathode electrode (2) is less than the potential of the anode electrode (1) when the potential of the anode electrode (1) is equal to or less than the potential of the cathode electrode (2).

2. The method for controlling the electrolytic device (800) according to claim 1, further comprising:
a stopping step of stopping an operation of the electrolytic device (800).

3. The method for controlling the electrolytic device (800) according to claim 1, wherein
the electrolytic device (800) further includes a membrane (3) between the cathode electrode (2) and the anode electrode (1).

4. The method for controlling the electrolytic device (800) according to claim 1, wherein
at least one of the group consisting of carbon monoxide, formic acid, methane, ethane, ethylene, methanol, ethanol, and ethylene glycol is produced at the cathode electrode (2).

5. The method for controlling the electrolytic device (800) according to claim 1 or 2, wherein
the control step controls the potential of the anode to be higher than the potential of the cathode by more than 0 V and equal to or lower than 1.23 V.

6. The method for controlling the electrolytic device (800) according to claim 1 or 2, wherein
in the control step, a current of 0.001% or more and 0.1% or less of a current during operation of the electrolytic device (800) is caused to flow between the cathode electrode (2) and the anode electrode (1).

7. The method for controlling the electrolytic device (800) according to claim 1 or 2, wherein
the electrolytic device (800) further includes
a power supply (60), and
a diode between the anode electrode (1) and the power supply (60).

8. The method for controlling an electrolytic device (800) according to claim 1 or 2, wherein
the control step controls the potential of the cathode electrode (2) based on the conductivity of the anode solution.

9. The method for controlling the electrolytic device (800) according to claim 1 or 2, wherein
the control step includes controlling the potential of the cathode electrode (2) based on ion concentration of the anode solution.

10. An electrolytic device (800) comprising:
a cathode electrode (2) containing metal ions and configured to reduce carbon dioxide,
an anode electrode (1) configured to oxidize water to generate oxygen, and
a control circuit (80) configured to
acquire information regarding a potential of the cathode electrode (2) and a potential of the anode electrode (1), and
control the potential of the cathode electrode (2) and / or the potential of the anode electrode (1) so that the potential of the cathode electrode (2) is less than the potential of the anode electrode (1) when the potential of the anode electrode (1) is equal to or less than the potential of the cathode electrode (2) .
